# EUROPÄISCHE PATENTANMELDUNG

(11) **EP 1 315 270 A1**
(43) Veröffentlichungstag der Anmeldung: **28.05.2003**
(21) Anmeldenummer: 01127822.3
(22) Anmeldetag: 22.11.2001
(51) Int. Cl.: H02K 1/30

(54) **Polrad**

(71) Anmelder: ALSTOM (Switzerland) Ltd, 5401 Baden (CH)
(72) Erfinder: Neff, Ueli, 5225 Oberbözberg (CH)

(57) **Zusammenfassung**

Bei einem Polrad (10) mit einem um eine Achse drehbar gelagerten, eine Mehrzahl von Rippen (12) umfassenden Radstern (11), und einem den Radstern (11) konzentrisch umgebenden, aus einzelnen Kranzblechen (16) zusammengesetzten Schichtkranz (14), welcher mit dem Radstern (11) mittels Keilen (13) über eine Schichtkranzverkeilung verbunden ist, wird eine vereinfachte Verbindung zwischen Schichtkranz (14) und Radstern (11) dadurch erreicht, dass die Keile (13) und die Kranzbleche (16) so ausgebildet sind, dass sie unter Bildung einer starren Verbindung formschlüssig ineinandergreifen.

## Beschreibung

### TECHNISCHES GEBIET

Die vorliegende Erfindung bezieht sich auf das Gebiet der elektrischen Maschinen. Sie betrifft ein Polrad gemäss dem Oberbegriff des Anspruchs 1.

Ein solches Polrad ist z.B. aus der Druckschrift DE-A1-28 52 980 bekannt.

### STAND DER TECHNIK

Bei Polrädern, wie sie aus der eingangs genannten DE-A1-28 52 980 oder der EP-A1-0 334 020 oder der US-A-4,143,457 bekannt sind, wird ein aus einzelnen Kranzblechen aufgeschichteter Schichtkranz durch Verkeilen mit einem Radstern ("Rotorspider") verbunden, der um eine zentrale Achse drehbar gelagert ist. Die Schichtkranzverkeilung besteht - je nach Herstellungsart des Radsterns - meist aus einem Keilträger, einem Keil und einem oder mehreren Gegenkeilen (siehe z.B. die EP-A1-0 334 020 oder die US-A-4,143,457). Der Radstern ist im Bereich der Verbindung zum Schichtkranz eine starre Struktur, bestehend aus zwei oder mehreren Scheiben, den radialen Rippen (die auch aus der radialen Richtung heraus gekippt oder "oblique" angeordnet sein können) und den Keilträgern (siehe z.B. die Fig. 2 der DE-A1-28 52 980). Die Rippen sind mit den Scheiben und den Keilträgern verschweisst und können deshalb im Bereich der Verbindung zum Schichtkranz auch bei einer "obliquen" Anordnung nicht als "oblique" Elemente funktionieren. Der Keil wird mit dem Gegenkeil (oder den Gegenkeilen) durch Reibschluss mit dem Schichtkranz starr verbunden.

Die Kranzbleche haben rechteckige Aussparungen, damit Keil und Gegenkeil(e) aufgenommen werden können. Im Kranzblech können zwei oder mehrere Aussparungen vorkommen. Auch können pro Blech ein oder mehrere Keile im Eingriff sein. Der Keil und Keilträger können sich relativ zueinander bewegen. Dies ist wichtig, denn ohne die Möglichkeit der Relativbewegung wäre die mechanische Beanspruchung des Radsterns und des Rotorkranzes im Betrieb (Fliehkraft, unterschiedliche Temperaturverteilung im Schichtkranz und Radstern) zu hoch.

Nachteilig ist bei der bekannten Schichtkranzverkeilung einerseits der durch die Keilträger, Keile und Gegenkeile verursachte relativ grosse konstruktive und fertigungstechnische Aufwand. Andererseits sind die Gleitbewegungen zwischen Keil und Keilträger in der Praxis nur schwer zu beherrschen. Schliesslich wird nicht selten der Schichtkranz auf den Radstern aufgeschrumpft (siehe z.B. die US-A-4,143,457). Durch den Schrumpf werden aber im Stillstand des Polrades (Rotors) hohe mechanische Spannungen im Radstern induziert, was eine steifere und teurere Konstruktion des Radsternes erforderlich macht.

### DARSTELLUNG DER ERFINDUNG

Es ist daher Aufgabe der Erfindung, ein Polrad mit einer Schichtkranzverkeilung zu schaffen, welches die Nachteile bekannter Lösungen vermeidet und sich insbesondere durch einen vereinfachten Aufbau und eine vereinfachte Herstellung auszeichnet.

Die Aufgabe wird durch die Gesamtheit der Merkmale des Anspruchs 1 gelöst. Der Kern der Erfindung besteht darin, die Keile und die Kranzbleche so auszubilden, dass sie unter Bildung einer starren Verbindung formschlüssig ineinandergreifen. Hierdurch werden komplizierte Aufteilungen in keile und Gegenkeile unnötig und die Verbindung zwischen Schichtkranz und Keilen wird erheblich vereinfacht.

Eine bevorzugte Ausgestaltung des erfindungsgemässen Polrades zeichnet sich dadurch aus, dass die Keile auf der dem Schichtkranz zugewandten Seite schwalbenschwanzförmig ausgebildet sind, und dass die Kranzbleche Aussparungen aufweisen, in welche die Keile mit ihrer Schwalbenschwanzform unter Bildung einer starren Verbindung eingreifen.

Die Kranzbleche weisen dabei vorzugsweise jeweils eine Mehrzahl von Aussparungen auf, wobei jede der Aussparungen auf der einen Seite durch eine schwalbenschwanzförmige Auflageflanke und auf der anderen Seite durch eine rechtwinklig angeordnete Flanke begrenzt ist.

In einer ersten Weiterbildung der bevorzugten Ausgestaltung weist der Radstern schrägstehende ("oblique") Rippen auf, und die Keile sind mit den Rippen fest verbunden, insbesondere verschweisst.

In einer zweiten Weiterbildung der bevorzugten Ausgestaltung weist der Radstern radiale Rippen auf, an den Rippen sind Keilträger befestigt, und die Keile sind in den Keilträgern gleitend gelagert.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer Seitenansicht einen Ausschnitt von einem Polrad mit schräggestellten ("oblique") Rippen gemäss einem ersten Ausführungsbeispiel der Erfindung;
- Fig. 2: die Draufsicht von oben auf das Polrad nach Fig. 1
- Fig. 3: in den Teilfiguren (a) bis (c) verschiedene Beispiele für die Gestaltung der Kranzbleche beim Polrad gemäss Fig. 2; und
- Fig. 4: in einer zu Fig. 2 vergleichbaren Darstellung ein zweites Ausführungsbeispiel des erfindungsgemässen Polrades mit radial orientierten Rippen.

### WEGE ZUR AUSFÜHRUNG DER ERFINDUNG

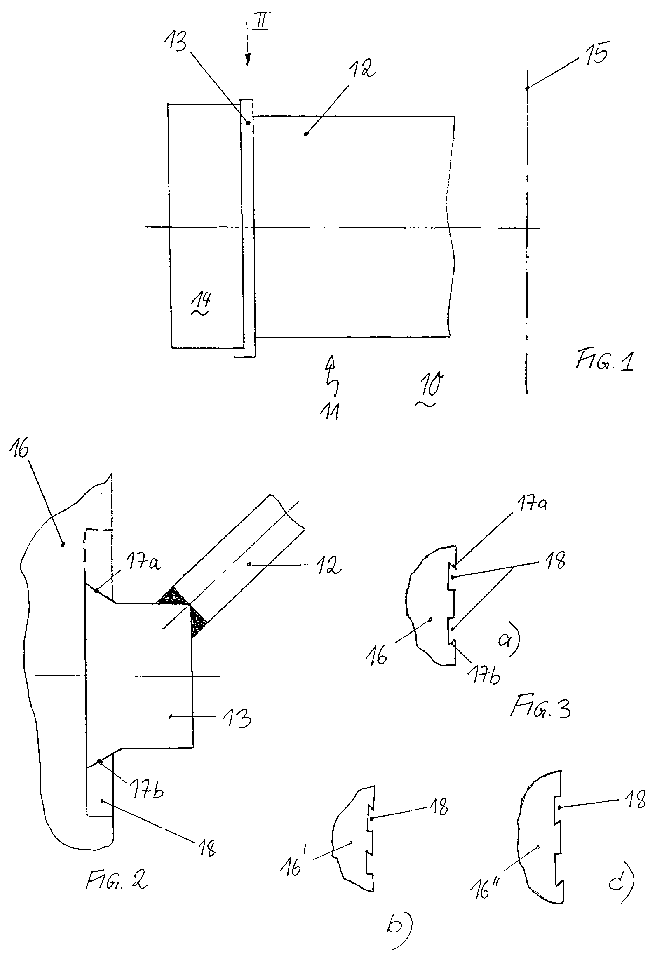

In Fig. 1 und 2 ist in der Seitenansicht und in der Draufsicht von oben ein Ausschnitt eines Polrades gemäss einem ersten bevorzugten Ausführungsbeispiel der Erfindung für Radkränze mit schräg verlaufenden Speichen (Rippen) dargestellt. Das um eine Achse 15 drehbare Polrad 10 weist einen Radstern 11 mit einer Mehrzahl von schräg ("oblique") nach aussen abgehenden Rippen 12 auf, die jeweils mittels Keilen 13 mit einem aus einzelnen Kranzblechen 16, 16', 16" (Fig. 3) aufgebauten Schichtkranz 14 verbunden sind. Der Schichtkranz 14 umgibt den Randstern 11 konzentrisch. Die neuartige Schichtkranzverkeilung umfasst nur noch jeweils einen Keil 13, welcher eine Schwalbenschwanzform aufweist (Fig. 2). Im Gegensatz zur bekannten Lösung haben die Kranzbleche 16, 16', 16" Aussparungen 18, deren eine Flanke - wie bisher - eine rechteckige Form hat, deren andere Flanke aber schwalbenschwanzförmig ausgeführt ist (Fig. 3(a)bis (c)). Nur diese Auflageflanke (17a, b in Fig. 2) kann zur Verbindung zwischen Kranzblech 16 und Keil 13 verwendet werden. Im Kranzblech 16, 16', 16" können zwei oder mehrere Aussparungen 18 vorkommen. Auch können pro Kranzblech ein oder mehrere Keile 13 im Eingriff sein.

Im einfachsten Fall wird das Kranzblech gemäss Fig. 3(a) ausgeführt (Kranzblech 16). Der Schichtkranz 14 wird durch gegenseitige Verschichtung der Kranzbleche 16 aufgebaut. Falls nötig, kann das Kranzblech auch gemäss Fig. 3(b) ausgeführt werden (Kranzblech 16'). Hier wird zusätzlich zur gegenseitigen Verschichtung das Kranzblech beim Aufeinanderschichten auch noch gekehrt (Kranzblech 16" in Fig. 3(c)). Im Grunde genommen kann jede Variation (zwei oder mehrere Aussparungen 18, Auflageflanke 17a, b links oder rechts, ein oder mehrere Keil(e) pro Kranzblech im Eingriff) vorkommen.

Der Grundsatz dabei ist immer, dass die starre Verbindung zwischen Keil 13 und Schichtkranz 14 durch die Form der Kranzbleche und durch die Wahl der Verschichtung sowohl auf der linken als auch auf der rechten Auflageflanke 17a, b des Keiles 13 zu liegen kommt. Die Kranzbleche 16, 16', 16" können sowohl gelasert als auch gestanzt werden. Der Radstern 11 besteht im Bereich der Verbindung zum Schichtkranz 14 aus "oblique" angeordneten Rippen 12, welche mit dem Keil 13 starr verbunden (z.B. verschweisst) sein müssen. Die in Fig. 1 der DE-A1-28 52 980 erkennbaren Scheiben im Bereich der Verbindung zwischen Schichtkranz und Radstern entfallen. Nur durch diese Anordnung funktionieren die Rippen 12 auch tatsächlich als "oblique" Elemente und reduzieren die mechanische Beanspruchung im Keil 13 und Schichtkranz 14 im Betrieb des Polrades 10 (Fliehkraft, unterschiedliche Temperaturverteilung im Schichtkranz 14 und Radstern 11).

Die Vorteile der neuen Schichtkranzverkeilung gemäss Fig. 1-3 sind:
- kein teurer Keilträger mit Keil und Gegenkeil nötig;
- einfache Verbindung zwischen Schichtkranz und Keil;
- keine schwer zu beherrschenden Gleitbewegungen mehr möglich;
- durch die starre Verbindung zwischen Schichtkranz und Radstern wird ein manchmal gefordertes Schrumpfen des Schichtkranzes überflüssig.

Das oben erläuterte Ausführungsbeispiel funktioniert nur bei einer "obliquen" Verbindung zwischen Schichtkranz 14 und Radstern 11 (schräge Rippen 12).

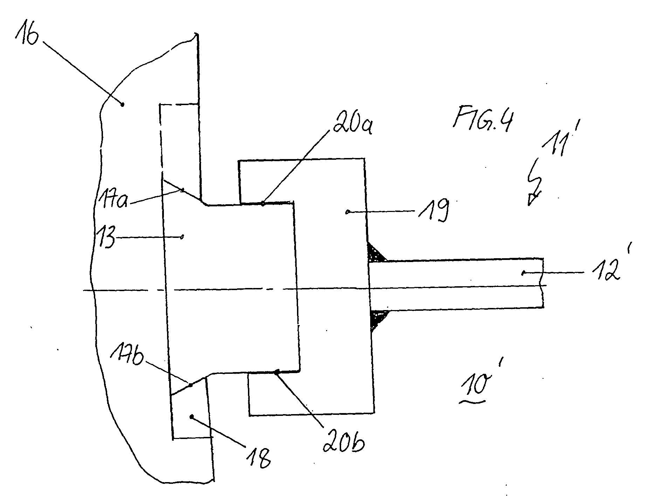

Ein weiteres bevorzugtes Ausführungsbeispiel ist in den Fig. 4 und 5 dargestellt. Die Schichtkranzverkeilung zwischen Radstern 11' und dem Schichtkranz besteht bei diesem Polrad 10' jeweils aus einem Keilträger 19, welcher dieselbe Form hat wie bei der z.B. aus der DE-A1-28 52 980 bekannten Verkeilung, und einem Keil 13, welcher identisch ist zu Fig. 2. Die starre Verbindung zwischen Schichtkranz und Keil 13 ist analog zu Fig. 2, und die Form der Kranzbleche 16 (bzw. 16', 16") ist dieselbe wie in Fig. 3. Der Radstern 11' unterscheidet sich vom Radstern 11 aus Fig. 2 dadurch, dass die Rippen 12' radial sind. Damit wird einerseits die herkömmliche Verkeilungsart (mit Keil und Gegenkeil(en)) ersetzt, andererseits können sich Keil 13 und Keilträger 19 relativ zueinander entlang von Gleitflächen 20a,b bewegen. In diesem Ausführungsbeispiel ist somit die starre Verbindung durch einen schwalbenschwanzförmigen Keil kombiniert mit einer gleitenden Lagerung des Keil in einem Keilträger.

Dieses Ausführungsbeispiel funktioniert nicht bei einer "obliquen" Verbindung zwischen Schichtkranz und Radstern (schräge Rippen).

### BEZUGSZEICHENLISTE

- 10, 10': Polrad
- 11,11': Radstern (Rotorspider)
- 12,12': Rippe
- 13: Keil
- 14: Schichtkranz
- 15: Achse
- 16,16',16": Kranzblech
- 17a,b: Auflageflanke
- 18: Aussparung (Kranzblech)
- 19: Keilträger
- 20a,b: Gleitfläche

## Patentansprüche

1. Polrad (10, 10') mit einem um eine Achse (15) drehbar gelagerten, eine Mehrzahl von Rippen (12, 12') umfassenden Radstern (11, 11'), und einem den Radstern (11, 11') konzentrisch umgebenden, aus einzelnen Kranzblechen (16, 16', 16") zusammengesetzten Schichtkranz (14), welcher mit dem Radstern (11, 11') mittels Keilen (13) über eine Schichtkranzverkeilung verbunden ist, **dadurch gekennzeichnet, dass** die Keile (13) und die Kranzbleche (16, 16', 16") so ausgebildet sind, dass sie unter Bildung einer starren Verbindung formschlüssig ineinandergreifen.

2. Polrad nach Anspruch 1, **dadurch gekennzeichnet, dass** die Keile (13) auf der dem Schichtkranz (14) zugewandten Seite schwalbenschwanzförmig ausgebildet sind, und dass die Kranzbleche (16, 16', 16") Aussparungen (18) aufweisen, in welche die Keile (13) mit ihrer Schwalbenschwanzform unter Bildung einer starren Verbindung eingreifen.

3. Polrad nach Anspruch 2, **dadurch gekennzeichnet, dass** die Kranzbleche (16, 16', 16") jeweils eine Mehrzahl von Aussparungen (18) aufweisen, und dass jede der Aussparungen (18) auf der einen Seite durch eine schwalbenschwanzförmige Auflageflanke (17a, b) und auf der anderen Seite durch eine rechtwinklig angeordnete Flanke begrenzt ist.

4. Polrad nach Anspruch 3, **dadurch gekennzeichnet, dass** bei den Aussparungen (18) der Kranzbleche (16', 16") die schwalbenschwanzförmigen Auflageflanken (17a, b) stets auf derselben Seite angeordnet sind, und dass die Kranzbleche (16', 16") im Schichtkranz (14) beim Aufeinanderschichten gegenseitig verschichtet und abwechselnd gekehrt angeordnet sind.

5. Polrad nach Anspruch 3, **dadurch gekennzeichnet, dass** bei den Aussparungen (18) der Kranzbleche (16) die schwalbenschwanzförmigen Auflageflanken (17a, b) stets auf abwechselnden Seiten angeordnet sind, und dass die Kranzbleche (16) im Schichtkranz (14) beim Aufeinanderschichten gegenseitig verschichtet angeordnet sind.

6. Polrad nach einem der Ansprüche 1 bis 5, **dadurch gekennzeichnet, dass** der Radstern (11) schrägstehende ("oblique") Rippen (12) aufweist, und dass die Keile (13) mit den Rippen (12) fest verbunden, insbesondere verschweisst, sind.

7. Polrad nach einem der Ansprüche 1 bis 5, **dadurch gekennzeichnet, dass** der Radstern (11') radiale Rippen (12') aufweist, dass an den Rippen (12') Keilträger (19) befestigt sind, und dass die Keile (13) in den Keilträgern (19) gleitend gelagert sind.
